# DEMANDE DE BREVET EUROPEEN

(11) **EP 0 554 147 A1**
(43) Date de publication de la demande: **04.08.1993**
(21) Numéro de dépôt: 93400155.3
(22) Date de dépôt: 22.01.1993
(51) Int. Cl.: B62D 55/112, F16J 1/10

(54) **Ensemble de suspension pour véhicule lourd, notamment pour véhicule chenillé**

(30) Priorité: 27.01.1992 FR 9200815
(71) Demandeur: MESSIER BUGATTI, F-78140 Velizy Villacoublay (FR)
(72) Inventeur: Derrien, Michel, F-78000 Versailles (FR); Brisedou, Philippe, F-94260 Fresnes (FR)
(74) Mandataire: Jaunez, Xavier

(57) **Abrégé**

L'invention concerne un ensemble de suspension à bras oscillant pour véhicule lourd, en particulier pour véhicule chenillé.

Conformément à l'invention, le bras oscillant (101) comporte un carter (102) recevant d'une part un amortisseur (120) du type à compression hydrostatique d'élastomère pâteux, monté coaxialement à l'axe d'oscillation (XI) dudit bras, et d'autre part un ressort oléo-pneumatique (140) du type bi-chambre, avec une chambre hydraulique (150) fermée par un piston coulissant (151) sur lequel est articulée une bielle (152) dont l'extrémité opposée au piston est articulée sur un organe fixe (156) intérieur audit carter.

## Description

L'invention concerne un ensemble de suspension pour véhicule lourd, notamment pour véhicule chenillé, du type à bras oscillant.

Les ensembles connus comportent un bras monté oscillant sur une structure fixe solidaire du châssis du véhicule, ce bras étant en outre équipé d'un axe (fusée) de roue, ou de galet lorsqu'il s'agit d'un véhicule chenillé comme un char, ledit axe étant décalé par rapport à l'axe d'oscillation du bras et situé en-dessous de celui-ci.

On se référera dans la suite du texte à un ensemble de suspension pour véhicule chenillé, mais il va de soi que l'invention n'est pas limitée à cette application particulière.

Les chars modernes comportent, de chaque côté, une série de galets, en général au nombre de cinq ou six, supportant la charge statique totale, dont chacun est monté sur un bras oscillant respectif. A titre indicatif, la masse suspendue par galet est de l'ordre de quatre tonnes, de sorte que les éléments de suspension doivent être adaptés en conséquence.

Les éléments de suspension doivent non seulement assurer le support de la masse du véhicule, mais aussi minimiser les effets dus aux mouvements de la caisse et les effets dus au sol, notamment lors de passages d'obstacles aux vitesses élevées.

On s'oriente de plus en plus vers des systèmes intégrés dans le bras oscillant, pour avoir une compacité et une protection optimales, ces systèmes apparaissant plus attractifs que les suspensions à barres transversales de torsion, lesquelles sont encombrantes et difficiles à régler, sans parler des inconvénients inhérents à la traversée de la structure.

On connaît déjà des ensembles de suspension comprenant un carter recevant un amortisseur à disques de friction imbriqués et un ressort oléo-pneumatique mono-chambre. L'amortisseur inclut des organes permettant d'exercer une compression hydraulique sur les disques imbriqués, pour la mise en oeuvre de la fonction amortissement (par exemple une came solidaire du carter du bras oscillant, contre laquelle s'appuie un doigt de commande coopérant avec le système de freinage hydraulique).

De tels systèmes sont intéressants dans la mesure où les fonctions amortissement et ressort sont relativement découplées, ce qui rend la suspension moins sensible aux variations de température, mais ces systèmes présentent une structure complexe du fait de l'organisation des organes de compression hydraulique associés aux disques de friction imbriqués, et par suite de l'étanchéité à mettre en oeuvre pour la partie concernée de l'ensemble de suspension. De plus, la commande par doigt mobile peut présenter des faiblesses lors de conditions difficiles d'utilisation.

L'invention a pour objet de réaliser un ensemble de suspension à bras oscillant dont la structure soit à la fois simple et fiable, et permette une réalisation très compacte compatible avec un volume disponible minimal (ce qui permet de peu entamer la structure du véhicule).

L'invention a aussi pour objet de réaliser un ensemble de suspension qui soit peu vulnérable aux fluctuations de température, tant internes qu'externes, et aussi indépendant que possible de celles-ci, de façon à affecter le moins possible la garde au sol du véhicule.

L'invention a encore pour objet de réaliser un ensemble de suspension qui permette à la fois un passage d'obstacles satisfaisant aux vitesses élevées et une bonne stabilité dynamique du véhicule.

Il s'agit plus particulièrement d'un ensemble de suspension pour véhicule lourd, notamment pour véhicule chenillé, comportant un bras monté oscillant sur une structure fixe solidaire du châssis du véhicule et équipé d'un axe de roue ou de galet, ledit axe étant décalé par rapport à l'axe d'oscillation du bras et situé en-dessous de celui-ci, caractérisé par le fait que le bras oscillant comprend un carter recevant d'une part un amortisseur du type à compression hydrostatique d'élastomère pâteux, ledit amortisseur étant monté coaxialement à l'axe d'oscillation dudit bras, et d'autre part un ressort oléo-pneumatique du type bi-chambre, avec une chambre hydraulique fermée par un piston coulissant sur lequel est articulée une bielle dont l'extrémité opposée au piston est articulée sur un organe fixe intérieur audit carter.

De préférence, l'amortisseur comporte un stator solidaire de la structure fixe du véhicule, sur lequel le carter du bras oscillant est monté tournant, et à l'intérieur duquel tourne un rotor qui est solidaire en rotation de ce carter par l'intermédiaire d'un flasque latéral de fermeture, l'organe fixe sur lequel est articulée la bielle de transmission étant réalisé sous la forme d'une chape montée directement sur ledit stator. En particulier, le flasque latéral de fermeture est fixé par sa périphérie sur le carter, et présente une extension cylindrique s'étendant coaxialement à l'intérieur du rotor, ladite extension et ledit rotor étant accouplés en rotation par des cannelures respectives.

Il est également avantageux que le carter du bras oscillant comporte deux puits cylindriques associés au ressort oléo-pneumatique, lesdits puits étant adjacents et communiquant entre eux par un canal de liaison hydraulique, avec un premier puits dans lequel coulisse le piston associé à la bielle de transmission, et un second puits dans lequel coulisse un piston séparateur associé à une chambre de gaz haute pression. La réalisation en deux puits adjacents est à la fois intéressante pour la compacité et pour la répartition des masses.

De préférence alors, l'axe du premier puits est sensiblement vertical lorsque le ressort oléo-pneumatique est détendu. Avantageusement en outre, la bielle de transmission est sensiblement verticale lorsque le ressort oléo-pneumatique est détendu.

Une telle disposition est favorable pour la répartition des efforts exercés sur les paliers associés au carter du bras oscillant, tout en étant compatible avec un faible volume d'encastrement.

Il est également intéressant que les deux puits cylindriques soient agencés de part et d'autre de l'axe de galet, en vue d'une compacité optimale du bras oscillant.

Avantageusement encore, la chambre de gaz haute pression du second puits est agencée en partie inférieure de celui-ci, en étant délimitée par un fond amovible dudit puits et par le piston séparateur, ledit piston séparateur délimitant une chambre supérieure contenant un volume de fluide hydraulique en communication directe avec la chambre hydraulique du premier puits, ledit volume délimitant une chambre de gaz basse pression.

Un tel agencement permet d'éviter d'avoir à utiliser un deuxième piston séparateur dans le second puits, et favorise le mouillage permanent des joints du piston séparateur unique par le fluide hydraulique adjacent.

Selon un mode d'exécution particulier, la pression de la chambre de gaz haute pression du second puits est choisie à une valeur telle que le piston séparateur reste en appui contre une butée associée en position statique et pour un effort vertical inférieur à 1,5 fois l'effort vertical en position statique ; avantageusement alors, le dimensionnement des chambres du ressort oléo-pneumatique est choisi de telle façon que la course de compression correspondant à des efforts compris entre 1 et 1,5 fois l'effort statique varie peu comparativement aux variations des efforts verticaux.

D'autres caractéristiques et avantages de l'invention apparaîtront plus clairement à la lumière de la description qui va suivre et des dessins annexés, concernant un mode de réalisation particulier, en référence aux figures où :
- la figure 1 illustre en coupe un ensemble de suspension conforme à l'invention, ici associé à un galet de support de véhicule chenillé (le galet et la chenille sont seulement schématisés en pointillés), la position illustrée correspondant à la position détendue ;
- la figure 2 est une coupe partielle selon II-II de la figure 1, permettant de mieux distinguer l'agencement du rotor et du stator de l'amortisseur à compression hydrostatique d'élastomère ;
- la figure 3 est une vue en plan de l'ensemble de suspension précédent, permettant de mieux distinguer sa liaison à la structure du véhicule (la figure 1 étant ainsi une coupe selon I-I de la figure 3).

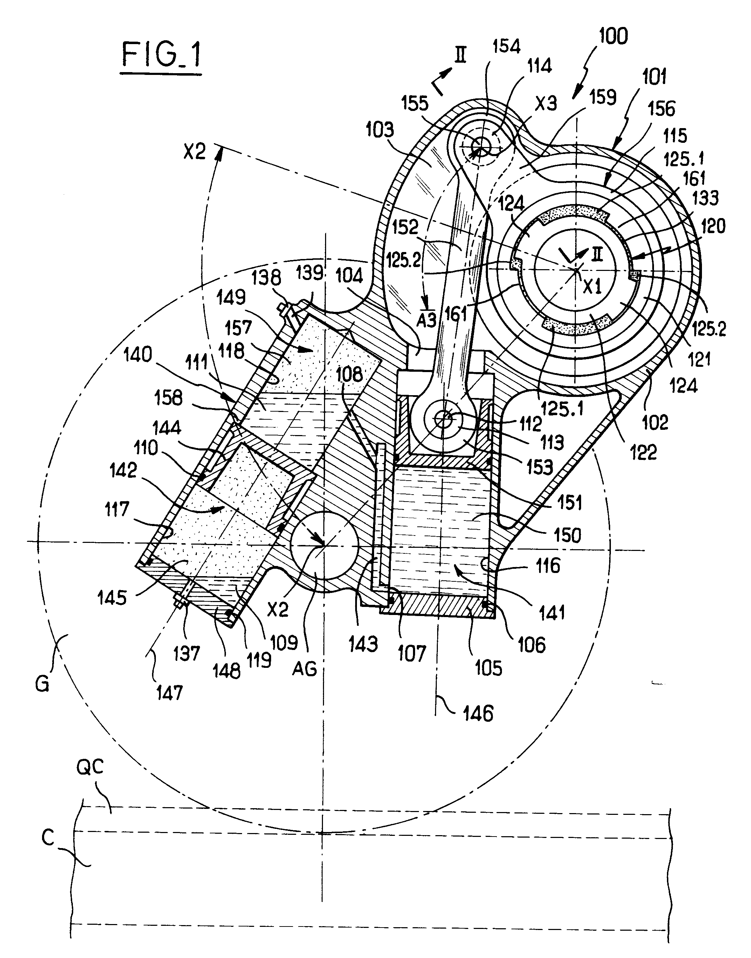

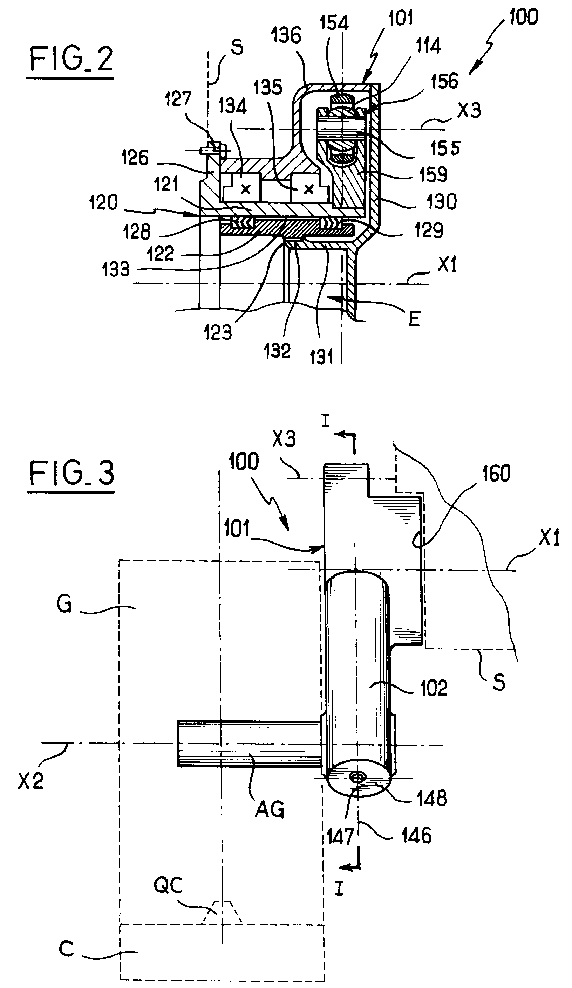

Les figures 1 et 3 permettent de distinguer un ensemble de suspension 100 pour véhicule lourd, en l'espèce pour un véhicule chenillé dont on a référencé S une partie de la structure fixe solidaire du châssis de ce véhicule. L'ensemble de suspension comporte un bras 101 monté oscillant sur la structure fixe S, en pouvant osciller autour d'un axe horizontal X1, ce bras étant équipé d'un axe de roue ou de galet AG sur lequel tourne ici un galet G passant sur une chenille C dont on distingue la quille de maintien latéral QC. L'axe de rotation du galet G est repéré X2, et cet axe est décalé par rapport à l'axe d'oscillation X1 du bras 101, en étant situé en-dessous de celui-ci.

Ainsi que cela est mieux visible sur la figure 3, le bras oscillant 101 est monté dans un encastrement 160 de la structure S, avec un espace disponible extrêmement réduit. La description qui va suivre de la structure du bras oscillant montrera que l'agencement des composants de ce bras est compatible avec un tel encastrement dont le volume est minimal, ce qui permet de peu entamer la structure de véhicule S.

Conformément à une caractéristique essentielle de l'invention, le bras oscillant 101 comprend un carter 102 recevant d'une part un amortisseur 120 du type à compression hydrostatique d'élastomère pâteux, cet amortisseur étant monté coaxialement à l'axe d'oscillation X1 dudit bras, et d'autre part un ressort oléo-pneumatique 140 du type bi-chambre , avec une chambre hydraulique 150 fermée par un piston coulissant 151 sur lequel est articulée une bielle 152 dont l'extrémité 154 opposée au piston est articulée sur un organe fixe 156 intérieur audit carter.

On constate ainsi que les fonctions amortisseur et ressort sont extrêmement découplées, et que le logement des organes associés à ces deux fonctions sont confinés dans des zones précises du carter du bras oscillant, avec en particulier une chambre d'amortisseur 103 recevant l'amortisseur 120 à compression hydrostatique d'élastomère pâteux, cette chambre ne communiquant que par un passage 104 associé à la bielle de transmission 152 avec les autres chambres du carter 102. Un tel confinement est naturellement favorable pour obtenir un ensemble de suspension peu vulnérable aux fluctuations de température, tant internes qu'externes, et très indépendant de celles-ci.

On va maintenant décrire, en se référant aux figures 1 et 2, les organes constitutifs de l'amortisseur 120 à compression hydrostatique d'élastomère pâteux, le principe général de tels amortisseurs étant bien connu par ailleurs.

L'amortisseur 120 comporte ainsi un stator 121 solidaire de la structure fixe S du véhicule, sur lequel le carter 102 du bras oscillant 101 est monté tournant. Le stator 121 est de forme générale cylindrique, et présente une bride 126 qui permet d'assurer, par des boulons 127, la liaison à la structure fixe S. Le carter 101 du bras oscillant présente un bord latéral 136 qui est conformé de façon à contacter la bague extérieure de deux roulements 134, 135, qui sont par exemple à rouleaux coniques, associés au palier de support du bras oscillant. A l'intérieur du stator 121, un rotor 122 peut tourner coaxialement au stator, c'est-à-dire autour de l'axe d'oscillation X1 du bras, ledit rotor étant solidaire en rotation du carter 102 par l'intermédiaire d'un flasque latéral de fermeture 130. En l'espèce, le flasque latéral de fermeture 130 est fixé par sa périphérie sur le carter 102 (par exemple au moyen de boulons non représentés ici), et présente une extension cylindrique 131 qui s'étend coaxialement à l'intérieur du rotor 122, cette extension présentant des cannelures extérieures 132 coopérant avec des cannelures intérieures 123 homologues ménagées à l'intérieur du rotor 122. L'extension 131 et le rotor 122 sont ainsi accouplés en rotation par les cannelures respectives 123, 132, de sorte que ledit rotor tourne avec le carter du bras oscillant.

Ainsi que cela est mieux visible sur la figure 1, le rotor 122 et le stator 121 présentent des découpes circonférentielles définissant des chambres incurvées dans lesquelles est disposé un matériau pâteux, de préférence un élastomère silicone. Le rotor 122 présente ici deux saillies incurvées 124, et le stator 121 présente deux saillies homologues 161 : l'élastomère pâteux peut alors fluer d'un côté à l'autre des saillies 124, lors d'un mouvement relatif entre le rotor et le stator, en passant d'une chambre circonférentielle 125.1 à la chambre circonférentielle homologue 125.2 avec laquelle elle communique par un jeu prédéterminé 133, ces jeux permettant le passage de l'élastomère pâteux qui flue alors comme une gomme sous l'effet de la compression hydrostatique exercée. Ainsi que cela est mieux visible sur la figure 2, des joints 128 et 129 assurent l'étanchéité latérale des jeux de passage et des chambres circonférentielles précitées.

L'espace central E intérieur au rotor de l'amortisseur peut être naturellement mis à profit pour disposer un organe compensateur à accumulateur d'air, formant un vase d'expansion pressurisé, ce compensateur étant équipé d'un clapet associé, et d'un circuit menant aux chambres circonférentielles associées à l'élastomère pâteux.

L'organe fixe 156 sur lequel est articulée la bielle de transmission 152 est ici réalisé sous la forme d'une chape, montée directement sur le stator 121 par une portion cylindrique associée 115, cette chape présentant une extension 159 portant un axe 155 associé au point fixe d'articulation de la bielle de transmission 152. On a référencé X3 l'axe correspondant, autour duquel tourne la bielle 152 lorsque le carter 102 du bras oscillant tourne autour de l'axe X1 : pour mémoire, un arc en trait mixte indique la trajectoire suivie par un point fixe du carter du bras oscillant, cette trajectoire étant un arc de cercle compris entre l'axe X3 et un point A3, l'axe X2 du galet G se déplaçant quant à lui conformément à un arc de cercle également indiqué en trait mixte sur la figure 1.

Ainsi que cela est mieux visible sur la coupe partielle de la figure 2, l'extrémité 154 de la bielle 152 est articulée sur l'axe 155 par une rotule associée 114.

L'autre extrémité 153 de la bielle 152 est articulée autour d'un axe 112, par l'intermédiaire d'une rotule 113, ledit axe étant associé à un piston 151 qui coulisse dans un alésage 116 d'un premier puits cylindrique 141 ménagé dans le carter 102 du bras oscillant. Ce premier puits 141 comporte ainsi la chambre hydraulique 150 précitée qui est délimitée supérieurement par le piston coulissant 151, et inférieurement par un fond amovible 105 dont le montage étanche est assuré par un joint associé 106. Le carter 102 du bras oscillant 101 comporte un autre puits cylindrique 142, adjacent au premier puits 141, et communiquant avec lui par un canal de liaison hydraulique 141. Le canal de liaison hydraulique 141 relie ainsi un orifice inférieur 107 de la chambre 150 à un orifice supérieur 10b du deuxième puits cylindrique. Ces deux puits cylindriques 141 et 142 qui sont associés au ressort oléo-pneumatique 140 sont ici agencés de part et d'autre de l'axe de galet AG, en vue d'une compacité optimale du bras oscillant 101.

Le second puits 142 comporte un premier alésage 117 dans lequel coulisse un piston séparateur 144, l'étanchéité étant assurée par un joint dynamique 110. Ce piston séparateur 144 délimite avec un fond amovible 148 fermant le second puits 142 une chambre inférieure 145 de gaz haute pression (par exemple de l'azote), dont le gonflage peut être assuré par une valve de type traditionnel 137, et au fond de laquelle est prévu un petit volume de fluide hydraulique 109. L'étanchéité du fond est assurée par un joint noté 119. Dans la position qui est illustrée sur la figure 1, et qui correspond à une position détendue, le piston séparateur 144 est en appui contre une butée 158 qui est en fait un épaulement du carter du bras oscillant. Le second puits 142 présente en outre un deuxième alésage cylindrique 118, et le piston séparateur 144 délimite ainsi une chambre supérieure 149 contenant un volume de fluide hydraulique 111 en communication directe (par le canal de liaison hydraulique 143) avec la chambre hydraulique 150 du premier puits 141, ce volume de fluide hydraulique 111 délimitant directement une chambre de gaz basse pression 157 (par exemple de l'azote). Le remplissage et le gonflage de cette chambre supérieure 149 peuvent être assurés par l'intermédiaire d'un perçage supérieur 139 et d'une valve associée de conception traditionnelle 138.

Il convient de noter que l'axe 146 du premier puits 141 est sensiblement vertical lorsque le ressort oléo-pneumatique 140 est détendu, comme cela est représenté sur la figure 1. L'axe 147 du second puits 142 est quant à lui légèrement incliné, tout en étant dans un même plan médian perpendiculaire aux axes X1, X2 et X3. La bielle de transmission 152 est par ailleurs également sensiblement verticale lorsque le ressort oléo-pneumatique 140 est détendu.

L'agencement vertical du premier puits du carter, et de la bielle de transmission lorsque l'ensemble de suspension est détendu présente de nombreux avantages : la transmission des efforts est effectuée de manière favorable, et de plus on parvient ainsi à créer un couple de réaction (au centre du galet et au niveau du point fixe d'articulation de la bielle de transmission) qui décharge sensiblement les roulements associés au carter du bras, ceci grâce à la disposition latérale de la bielle de transmission. Ce déchargement des paliers est d'autant plus avantageux que l'espace disponible pour l'encastrement du bras oscillant est exigu.

L'ensemble de suspension 100 est représenté à la figure 1 en position détendue. Lorsque cet ensemble est soumis à l'effort vertical en position statique, associé à la masse correspondante, le carter du bras oscillant tourne autour de l'axe X1 et par suite le piston 151 s'enfonce dans le premier puits 141. Ce mouvement du piston provoque un refoulement du fluide hydraulique de la chambre 150 par le canal de liaison 143, dans la chambre supérieure 149 du second puits 142. Il convient de noter à ce titre que la section de passage du canal de liaison 143 ne doit pas être trop faible avant d'éviter tout effet de laminage qui serait indésirable en l'espèce, dans la mesure où il doit s'agir d'un élément oléo-pneumatique assurant exclusivement la fonction ressort, et donc sans amortissement supplémentaire. L'augmentation du volume de fluide hydraulique dans la chambre supérieure 149 a pour effet de comprimer le gaz contenu dans la partie supérieure de cette chambre : on obtient la première raideur du ressort oléo-pneumatique. Au-delà d'un certain seuil, correspondant à un effort vertical prédéterminé (qui sera par exemple inférieur à 1,5 fois l'effort vertical en position statique), la pression de gaz dans la chambre supérieure du second puits devient suffisante pour déplacer le piston séparateur 144, ce qui correspond à la deuxième partie de la courbe de raideur. De préférence, le dimensionnement des chambres du ressort oléo-pneumatique sera choisi de telle façon que la course de compression correspondant à des efforts compris entre 1 et 1,5 fois l'effort statique varie peu comparativement aux variations des efforts verticaux.

A titre indicatif, pour une course totale de 500 mm, on aura une course statique correspondant à un enfoncement de 150 mm pour le galet, avec de ce fait la possibilité d'un déplacement vertical du galet par rapport à la position statique qui est de 350 mm en compression et de 150 mm en détente. Le seuil d'effort correspondant au déplacement du piston séparateur pourra correspondre à une course d'environ 170 mm, ce qui est comparativement peu au regard des variations des efforts verticaux. On parvient ainsi à combiner à la fois la possibilité d'un passage d'obstacles satisfaisant aux vitesses élevées, et une bonne stabilité dynamique du véhicule.

L'ensemble de suspension ainsi décrit est peu vulnérable aux fluctuations de température, tant internes qu'externes, et de plus très indépendant de celles-ci, ce qui permet d'affecter le moins possible la garde au sol du véhicule. La structure du bras oscillant est à la fois simple et fiable, et autorise une réalisation très compacte qui est compatible avec un volume disponible minimal.

L'invention n'est pas limitée au mode de réalisation qui vient d'être décrit, mais englobe au contraire toutes variantes reprenant, avec des moyens équivalents, les caractéristiques essentielles énoncées plus haut.

## Revendications

1. Ensemble de suspension pour véhicule lourd, notamment pour véhicule chenillé, comportant un bras monté oscillant sur une structure fixe solidaire du châssis du véhicule et équipé d'un axe de roue ou de galet, ledit axe étant décalé par rapport à l'axe d'oscillation du bras et situé en-dessous de celui-ci, caractérisé par le fait que le bras oscillant (101) comprend un carter (102) recevant d'une part un amortisseur (120) du type à compression hydrostatique d'élastomère pâteux, ledit amortisseur étant monté coaxialement à l'axe d'oscillation (X1) dudit bras, et d'autre part un ressort oléo-pneumatique (140) du type bi-chambre, avec une chambre hydraulique (150) fermée par un piston coulissant (151) sur lequel est articulée une bielle (152) dont l'extrémité opposée au piston est articulée sur un organe fixe (156) intérieur audit carter.

2. Ensemble de suspension selon la revendication 1, caractérisé par le fait que l'amortisseur (120) comporte un stator (121) solidaire de la structure fixe (S) du véhicule, sur lequel le carter (102) du bras oscillant (101) est monté tournant, et à l'intérieur duquel tourne un rotor (122) qui est solidaire en rotation de ce carter (102) par l'intermédiaire d'un flasque latéral de fermeture (130), l'organe fixe (156) sur lequel est articulée la bielle de transmission (152) étant réalisé sous la forme d'une chape montée directement sur ledit stator.

3. Ensemble de suspension selon la revendication 2, caractérisé par le fait que le flasque latéral de fermeture (130) est fixé par sa périphérie sur le carter (102), et présente une extension cylindrique (131) s'étendant coaxialement à l'intérieur du rotor (122), ladite extension et ledit rotor étant accouplés en rotation par des cannelures respectives (123, 132).

4. Ensemble de suspension selon l'une des revendications 1 à 3, caractérisé par le fait que le carter (102) du bras oscillant (101) comporte deux puits cylindriques (141, 142) associés au ressort oléo-pneumatique (140), lesdits puits étant adjacents et communiquant entre eux par un canal de liaison hydraulique (143), avec un premier puits (141) dans lequel coulisse le piston (151) associé à la bielle de transmission (152), et un second puits (142) dans lequel coulisse un piston séparateur (144) associé à une chambre de gaz haute pression (145).

5. Ensemble de suspension selon la revendication 4, caractérisé par le fait que l'axe (146) du premier puits (141) est sensiblement vertical lorsque le ressort oléo-pneumatique (140) est détendu.

6. Ensemble de suspension selon les revendications 4 ou 5, caractérisé par le fait que la bielle de transmission (152) est sensiblement verticale lorsque le ressort oléo-pneumatique (140) est détendu.

7. Ensemble de suspension selon l'une des revendications 4 à 6, caractérisé par le fait que les deux puits cylindriques (141, 142) sont agencés de part et d'autre de l'axe de galet (AG), en vue d'une compacité optimale du bras oscillant (101).

8. Ensemble de suspension selon l'une des revendications 4 à 7, caractérisé par le fait que la chambre de gaz haute pression (145) du second puits (142) est agencée en partie inférieure de celui-ci, en étant délimitée par un fond amovible (148) dudit puits et par le piston séparateur (144), ledit piston séparateur délimitant une chambre supérieure (149) contenant un volume de fluide hydraulique en communication directe avec la chambre hydraulique (150) du premier puits (141), ledit volume délimitant une chambre de gaz basse pression (157).

9. Ensemble de suspension selon la revendication 8, caractérisé par le fait que la pression de la chambre de gaz haute pression (145) du second puits (142) est choisie à une valeur telle que le piston séparateur (144) reste en appui contre une butée associée (158) en position statique et pour un effort vertical inférieur à 1,5 fois l'effort vertical en position statique.

10. Ensemble de suspension selon la revendication 9, caractérisé par le fait que le dimensionnement des chambres du ressort oléo-pneumatique (140) est choisi de telle façon que la course de compression correspondant à des efforts compris entre 1 et 1,5 fois l'effort statique varie peu comparativement aux variations des efforts verticaux.
